# EUROPEAN PATENT APPLICATION

(11) **EP 3 187 740 A1**
(43) Date of publication of application: **05.07.2017**
(21) Application number: 16163491.0
(22) Date of filing: 01.04.2016
(51) Int. Cl.: F16C 11/06, F16C 11/10, A47F 8/00

(54) **AUTO-LOCKING BALL JOINT**

(30) Priority: 29.12.2015 US 201514982420
(71) Applicant: Leo D. Bernstein & Sons, Inc., New York, NY 10001 (US)
(72) Inventor: SUTTON, Levi, Truxton, NY 13158 (US)
(74) Representative: LEITZINGER OY

(57) **Abstract**

An auto-locking ball joint includes a first elongate member, a ball, and a second elongate member. The first elongate member includes a receiver disposed at one end. The receiver has an inner surface that defines a well. The ball is rotatable disposed within the well. The ball is formed from a plurality of segments that are moveable relative to one another towards and away from a ball axis. The second elongate member is translatable along the ball axis. In a locked configuration, the outer surface of the ball frictionally engages the inner surface to prevent the ball from rotating within the well. In an unlocked configuration of the ball joint, the ball is rotatable within the well. The second elongate member is depressed along the ball axis to transition the ball joint from locked configuration to the unlocked configuration.

## Description

### Background

### 1. Technical Field

The present disclosure relates to ball joints and, more specifically, to ball joints including an auto-locking mechanism.

### 2. Discussion of Related Art

Ball joints allow two links to be coupled together while permitting rotation of the links about the joint in all three rotational degrees of freedom (DOF). Some ball joints include a locking mechanism that allow the ball joint to be locked to fix the links to one another in one or more of the DOF.

Typically, a locking mechanism includes an external member that is moved into contact with a ball of the ball joint such that engagement of the external member and the ball locks the ball joint. One limitation of this type of locking member is that when a force is applied to one of the links to move the links relative to one another about the locked ball joint, the force of the external member exerted on the ball must be increased or be greater than the force applied to the links. It can be difficult for a user to exert a large enough force with the external member on the ball to lock the ball joint when a large force is applied to one of the links to move the links relative to one another.

Accordingly, there is a continuing need for ball joints that can lock two links relative to one another in the presence of a large force being exerted on the links.

### Summary

This disclosure relates generally to an auto-locking ball joint that is biased to a locked configuration where arms or links of the ball joint are fixed relative to one another. In the locked condition, the ball joint is configured to utilize forces on the links to increase the locking or fixing of the links relative to one another and acts as a self-actuating brake. As a self-actuating brake, the more force that is applied to move the ball joint the greater the locking force of the joint. The ball joint is transitioned to an unlocked condition by depressing one of the links towards the ball joint which allows the links of the ball joint to rotate in one or more degrees of freedom relative to one another. When the depressed link is released, the ball joint returns to the locked condition. It is envisioned that the force required to depress the link is relatively small compared to the forces experienced by the link in directions other than towards the ball joint to unlock the ball joint.

In an aspect of the present disclosure, an auto-locking ball joint includes a first elongate member, a ball, and a second elongate member. The first elongate member includes a receiver disposed at one end. The receiver has an inner surface that defines a well that rotatably receives the ball. The ball defines a ball axis and a channel about the ball axis. The ball is formed from a plurality of segments that are moveable towards and away from the ball axis. The segments of the ball cooperate to define an outer surface of the ball. The second elongate member is translatable along the ball axis and has first and second end portions. The first end portion is disposed within the channel of the ball. In a locked configuration of the auto-locking ball joint, the outer surface of the ball frictionally engages the inner surface defining the well to prevent the ball from rotating within the well. In an unlocked configuration of the auto-locking ball joint, the ball is rotatable within the well. The second elongate member is depressed towards the receiver along the ball axis to transition the auto-locking ball joint from the locked configuration to the unlocked configuration.

In aspects, the auto-locking ball joint is biased towards the locked configuration. The auto-locking ball joint may include a biasing member that is disposed within the well and engaged with the first end portion of the second elongate member to urge the auto-locking ball joint towards the locked configuration.

In some aspects, the plurality of segments of the ball define a first gap between adjacent segments in the locked configuration and define a second gap between adjacent segments in the unlocked configuration where the second gap is smaller than the first gap. In the unlocked configuration, the second gap may be substantially zero such that adjacent segments are in contact with one another. The first end portion of the second elongate member may include flats and edges that are defined at the intersection of adjacent flats. The edge of the first end portion may be disposed in a gap between adjacent segments of the ball such that rotation of the second elongate member engages the edge with one of the adjacent segments to move the ball segment outward and into engagement with the inner surface defining the well of the receiver. The geometry of the auto-locking ball joint may be designed such that rotation of the second elongate member increases the locking force of the joint. In addition, the more force applied to rotate the second elongate member may increase the locking ability of the auto-locking ball joint.

In certain aspects, the auto-locking ball joint includes a contracting member about the ball, the contracting member may urge the plurality of segments of the ball towards the ball axis. The contracting member may urge each segment towards adjacent segments to reduce the diameter of the ball.

In particular aspects, the second elongate member defines a lumen that is disposed about the ball axis and the first elongate member defines a passage that is in communication with the well. The auto-locking ball joint may include a pin that is disposed within the lumen and the passage to align the first and second elongate members with one another while allowing the auto-locking ball joint to rotate in only one degree of freedom in the unlocked configuration.

In aspects, at least a portion of the channel of the ball is frusctoconical in shape and the first end portion of the second elongate member is frusctoconical in shape. The entire channel of the ball may be frusctoconical in shape. The second end portion of the second elongate member may extend from the ball.

In some aspects, a length of contact between the second elongate member and the ball is larger in the unlocked configuration than in the locked configuration. The second elongate member may be configured to deflect in the locked configuration in the presence of a high load such that the auto-locking ball joint slips in the locked configuration.

In another aspect of the present disclosure, an auto-locking ball joint includes a first elongate member, a ball, and a second elongate member. The first elongate member includes a receiver disposed at one end. The receiver has an inner surface that defines a well. The ball is rotatably disposed within the well and has an outer surface. The ball defines a ball axis and a channel about the ball axis. The second elongate member is translatable along the ball axis and includes a portion disposed within the channel of the ball. In a locked configuration of the auto-locking ball joint, the outer surface of the ball frictionally engages the inner surface defining the well to prevent the ball from rotating within the well. In an unlocked configuration of the auto-locking ball joint, the ball is rotatable within the well. The second elongate member is depressed towards the receiver along the ball axis to transition the auto-locking ball joint to the unlocked configuration.

In aspects, the ball includes a plurality of segments that are disposed about the ball axis. The plurality of segments may be moveable towards and away from the ball axis to vary a diameter of the ball defined by the outer surface of the ball. Alternatively, the ball may be formed from a resilient compressible material such that a diameter of the ball defined by the outer surface of the ball may be varied.

In another aspect of the present disclosure, a mannequin includes first and second anatomical structures and a joint between the first and second anatomical structures. The joint includes an auto-locking ball joint to provide selective movement between the first and second anatomical structures. The auto-locking ball joint includes a first elongate member, a ball, and a second elongate member. The first elongate member includes a receiver disposed at one end. The receiver has an inner surface that defines a well. The first elongate member is disposed within and fixed relative to the first anatomical structure. The ball is rotatably disposed within the well and defines a ball axis and a channel about the ball axis. The ball is formed from a plurality of segments that are moveable towards and away from the ball axis. The segments of the ball cooperate to define an outer surface of the ball. The second elongate member is translatable along the ball axis and has first and second end portions. The first end portion is disposed within the channel of the ball and the second end portion is disposed within and fixed relative to the second anatomical structure. In a locked configuration of the joint of the mannequin, the outer surface of the ball frictionally engages the inner surface defining the well to prevent the first and second anatomical structures from moving relative to one another. In an unlocked configuration of the joint of the mannequin, the ball is rotatable within the well to allow the first and second anatomical structures to move relative to one another. The first anatomical structure is pressed into the joint to transition the joint from the locked configuration to the unlocked configuration.

In aspects, the first and second anatomical structures are moveable in three degrees of freedom relative to one another when the joint is in the unlocked configuration. Alternatively, the first and second anatomical structures may only be moveable in one degree of freedom relative to one another when the joint is in the unlocked configuration.

Further, to the extent consistent, any of the aspects described herein may be used in conjunction with any or all of the other aspects described herein.

### Brief Description of the Drawings

Various aspects of the present disclosure are described hereinbelow with reference to the drawings, which are incorporated in and constitute a part of this specification, wherein:
FIG. 1 is an example of a prior art locking ball joint;
FIG. 2 is a perspective view of an auto-locking ball joint provided in accordance with the present disclosure;
FIG. 3 is an exploded view, with parts separated of the ball joint of FIG. 2;
FIG. 4 is a cross-sectional view taken along section line 4-4 of FIG. 2 illustrating the ball joint in a locked configuration;
FIG. 5 is a front view of a ball of the ball joint of FIG. 3 in a locked configuration;
FIG. 6 is a front view of the ball of FIG. 4 in an unlocked configuration;
FIG. 7 is a cross-sectional view of the ball joint of FIG. 2 in an unlocked configuration;
FIG. 8 is a cross-sectional view of the ball joint of FIG. 2 in an unlocked configuration with a pin restricting the ball joint to a single rotational degree of freedom;
FIG. 9 is a cross-sectional view of the ball joint of FIG. 2 in a locked configuration with a stem deflected by a high load to clutch the ball joint;
FIG. 10 is a perspective view of a mannequin provided in accordance with the present disclosure including a ball joint of FIG. 2 in a shoulder joint in a locked configuration and a ball joint of FIG. 8 in an elbow joint in a locked configuration;
FIG. 11 is a perspective view of the mannequin of FIG. 10 with the ball joint in the shoulder joint in an unlocked configuration and the ball joint in the elbow joint in the locked configuration;
FIG. 12 is a perspective view of the mannequin of FIG. 11 with the ball joint in the shoulder joint returned to the locked configuration after rotation about the shoulder joint and the ball joint in the elbow joint in an unlocked configuration; and
FIG. 13 is a perspective view of the mannequin of FIG. 12 with the ball joint in the shoulder joint in the locked configuration and the ball joint in the elbow joint returned to the locked configuration after rotation of about the elbow joint.

### Detailed Description

Embodiments of the present disclosure are now described in detail with reference to the drawings in which like reference numerals designate identical or corresponding elements in each of the several views.

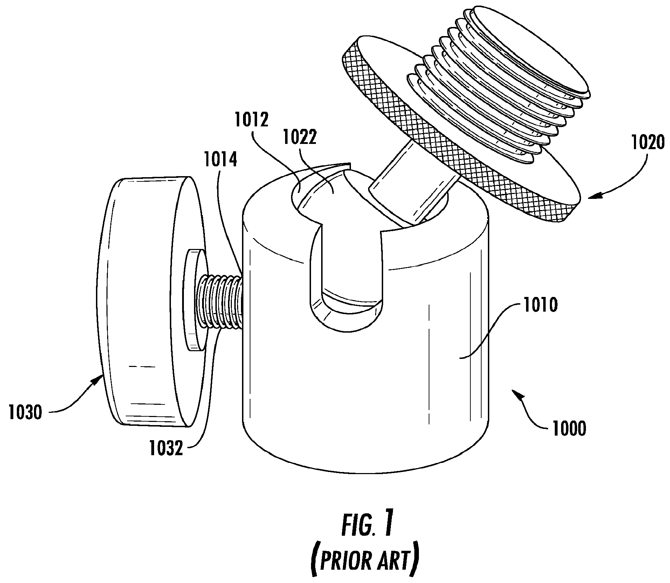

Typically, prior art locking ball joints use frictional engagement of a locking member to frictionally engage a ball and to urge the ball into frictional engagement with a portion of the ball joint. For example with reference to FIG. 1, a prior art locking ball joint 1000 is shown including a collar 1010, a ball end 1020, and a locking handle 1030. The collar 1010 defines a recess 1012 and a lock opening 1014. The ball end 1020 includes a ball 1022 that is rotatably disposed within the recess 1012 of the collar 1010. The locking handle 1030 includes a locking member 1032 that extends through the lock opening 1014 of the locking collar 1010 to engage the ball 1022. The engagement of the locking member 1032 and the ball 1022 locks ball end 1020 relative to the collar 1010 such that the locking ball joint 1000 is locked. It will be appreciated that the engagement of the locking member 1032 with the ball 1022 urges the ball 1022 into the collar 1010 such that a force exerted by the locking member 1032 on the ball 1022 is increased by the ball 1022 engaging the collar 1010 to define a total locking force. The locking ball joint 1000 requires the total locking force to be greater than a force applied to a link extending from the collar 1010 and a link extending from the ball end 1020 to maintain the ball joint 1000 in the locked state.

This disclosure relates generally to an auto-locking ball joint including a cup having a shaft, a ball, and a stem. The cup receives the ball and the ball receives the stem such that as the stem rotates the ball rotates within the cup. The ball joint includes a biasing member disposed between the stem an inner surface of the cup that biases the stem such that the ball joint is biased towards a locked condition where the ball frictionally engages the inner surface of the cup to prevent the stem from rotating relative to the cup. To transition the ball joint to an unlocked configuration, where the stem is rotatable relative to the cup, the stem is depressed towards the ball such that the stem moves relative to the ball against the biasing member to allow the ball to decrease in diameter. When the stem is released in the unlocked configuration, the biasing member urges the stem away from the ball to return the ball joint to the locked configuration.

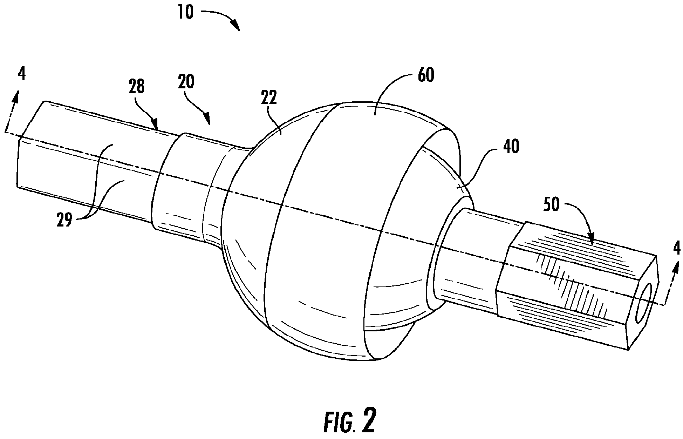

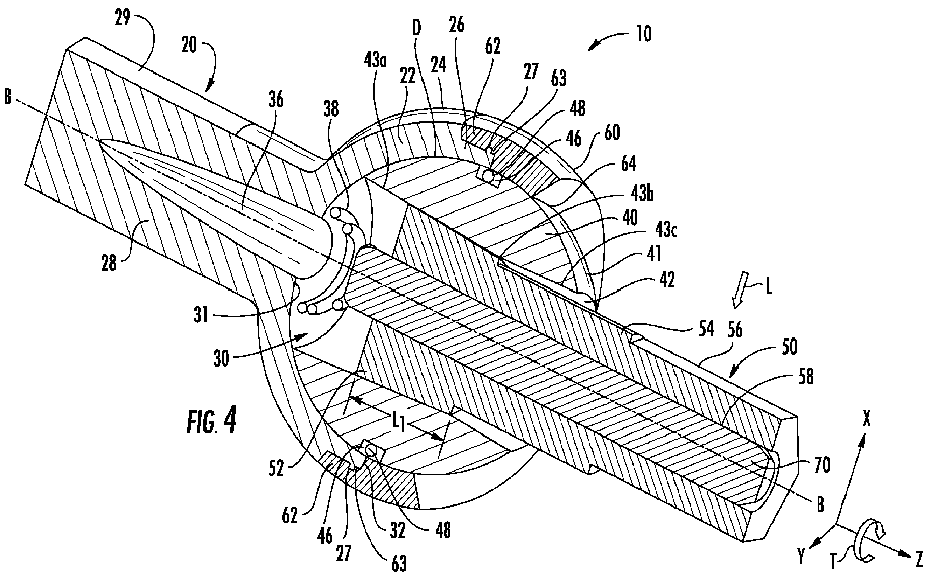

Referring now to FIGS. 2-4, a locking ball joint 10 is provided in accordance with the present disclosure including a cup 20, a locking biasing member 38, a ball 40, a stem 50, and a ring 60. The cup 20 includes a receiver 22 that has an outer surface 24 and defines a semi-spherical well 30. The outer surface 24 defines an annular recess 26 about an open side 32 of the well 30. The annular recess 26 may include a lip 27 adjacent the open side 32 of the well 30. The cup 20 includes a shaft 28 that extends away from the outer surface 24 opposite to the open end 32 of the well 30. It is envisioned that the shaft 28 may extend from any position along the outer surface 24. An outer surface of the shaft 28 may include engagement surfaces 29 as described in detail below. With particular reference to FIG. 4, the shaft 28 may define a longitudinal passage 36 that is in communication with the well 30.

The ball 40 is received within the well 30 of the cup 20 and defines a channel 42. The channel 42 of the ball 40 defines a ball axis B-B. The channel 42 includes a first or large diameter end 43a defining a first diameter and a second or small diameter end 43c defining a second diameter smaller than the first diameter. As shown, a portion of the channel 42 adjacent the large diameter end 43a is frusctoconical in shape and a portion 43b of the channel 42 adjacent the small diameter end 43c is substantially cylindrical in shape. It is envisioned that the entire channel 42 may be frusctoconical in shape. Further, it is envisioned that at least a portion of the channel 42 may have other shapes with a large diameter end 43a and a small diameter end 43c (e.g., wedge shaped).

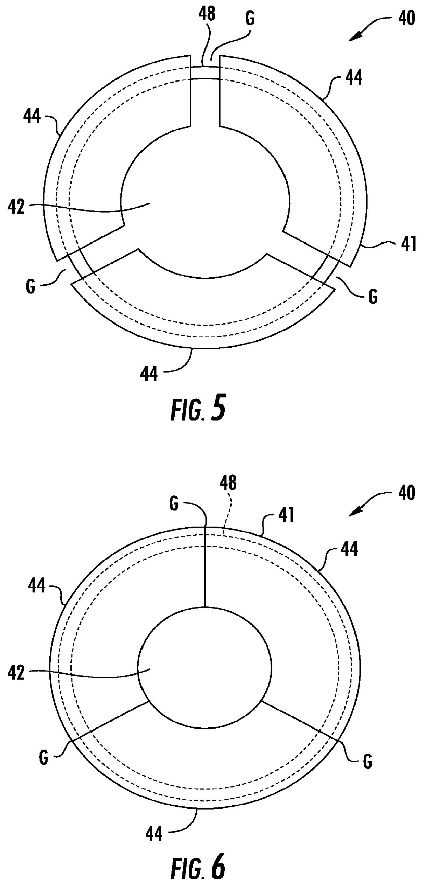

With additional reference to FIG. 5, the ball 40 is formed by three segments 44 that are arranged radially about the ball axis B-B with each segment 44 substantially wedge shaped such that each segment 44 defines a portion of the channel 42 and defines a portion of an outer surface 41 of the ball 40 having a ball diameter. Adjacent segments 44 define a gap G therebetween. As shown, the ball 40 includes three segments 44; however, it is contemplated that the ball 40 may include two segments (e.g., semi-spherical segments) or four or more segments. It is envisioned that the ball 40 may also include a single segment of resilient compressible material such that the ball diameter of the ball 40 may vary as detailed below. As shown, the segments 44 are equal in radial dimension (i.e., each segment 44 defines an equal portion of the channel 42 and the outer surface 41 of the ball 40); however, it is envisioned that the segments 44 may be unequal to one or more other segments 44 in radial dimension.

The segments 44 of the ball 40 cooperate to define an annular groove 46 about an outer surface 41 of the ball 40 transverse to the ball axis B-B (FIG. 4). The annular groove 46 receives a contracting member 48. When the contracting member 48 is received within the annular groove 46, an outer surface of the contracting member 48 is even with or disposed within the outer surface 41 of the ball 40. The contracting member 48 may urge the segments 44 towards one another such that the ball diameter of the ball 40 is reduced when the stem 50 is translated towards the cup 20 along axis B-B defined by the ball 40.

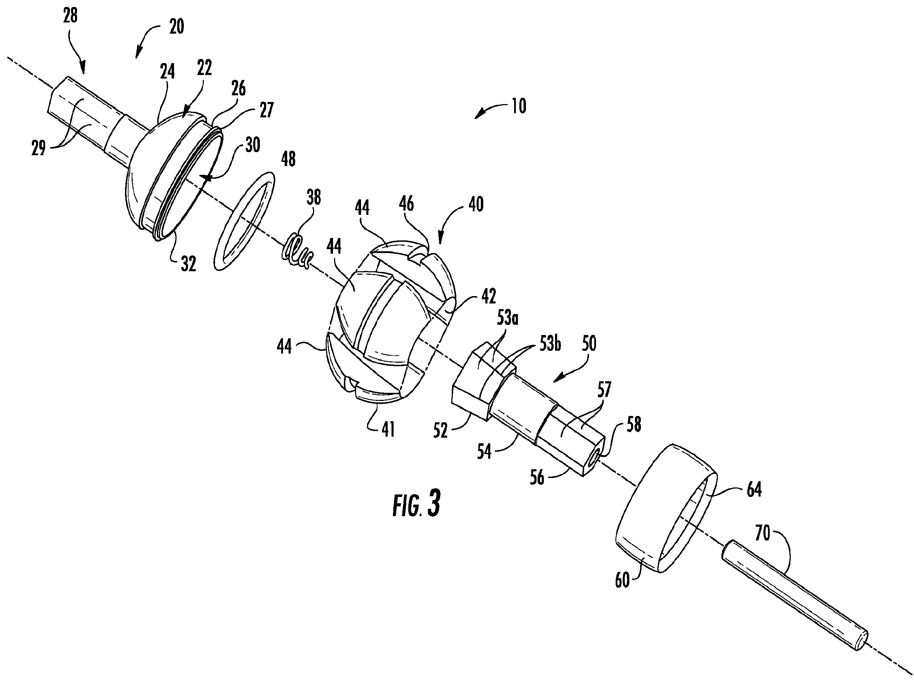

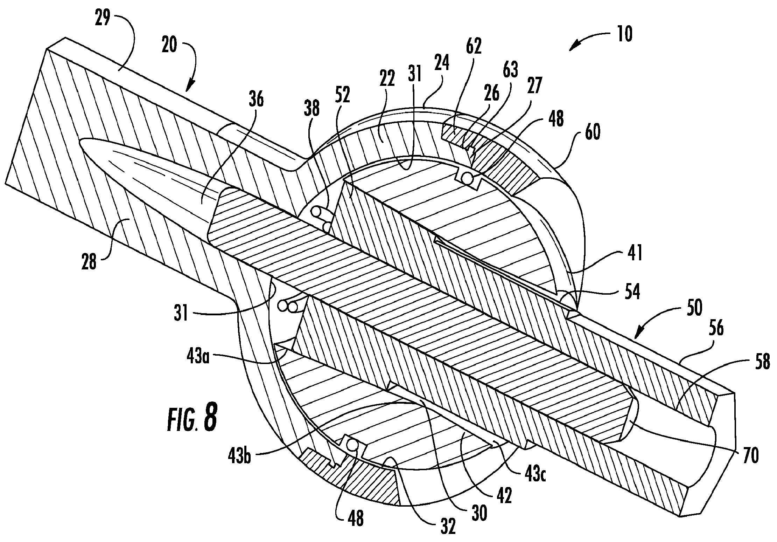

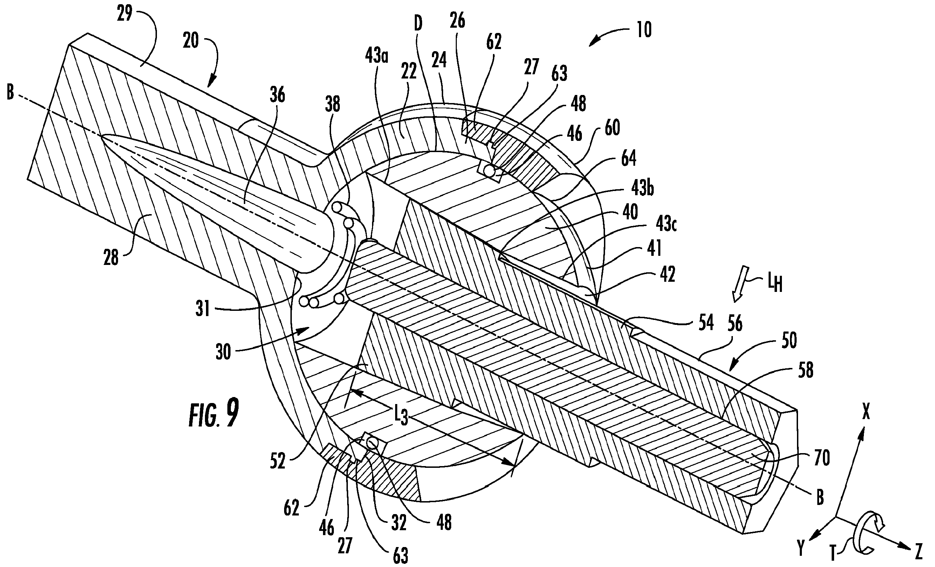

The stem 50 is an elongate member or link that is translatable along the ball axis B-B defined by the ball 40 and includes a first end portion 52, a second end portion 56, and a central portion 54 disposed between the first and second end portions 52, 56. The first end portion 52 of the stem 50 is disposed within the channel 42 of the ball 40 and the second end portion 56 of the stem 50 extends from the small diameter end 43b of the channel 42. The first end portion 52 of the stem 50 may be frustoconical in shape and includes flats 53a about an outer surface of the stem 50. The flats 53a of the first end portion 52 define edges 53b at the intersections of adjacent flats 53a (FIG. 3). As shown, the first end portion 52 includes six edges 53b; however, the number of edges 53b of the first end portion 52 of the stem 50 is a multiple of the number of segments 44 of the ball 40 and it is foreseen that there could be more or less than six edges 53b. For example, as shown, the ball 40 has three segments 44 and the first end portion 52 of the stem 50 has six edges 53b which is a factor of two edges 53b per segment 44. The multiple may be in a range of one to four. The second end portion 56 of the stem 50 may include engagement features 57 to facilitate attachment to another body (e.g., upper arm segment 106 (FIG. 9)). As shown, the engagement features 57 are flats disposed about the ball axis B-B that form a hexagonal shape transverse to the ball axis B-B. The central portion 54 is substantially cylindrical with a diameter less than or equal to the first end portion 52 of the stem 50 and equal to or greater than the second end portion 56 of the stem 50. The stem 50 may define a lumen 58 about the ball axis B-B that passes through the stem 50. The ball joint 20 may include a pin 70 that passes through the lumen 58 and into passage 36 defined in the shaft 28 of the cup 20 as detailed below with respect to FIG. 8.

Referring to FIGS. 3 and 4, the ring 60 is semi-circular in shape with substantially the same diameter of the receiver 22 of the cup 20 at the open end 32 of the well 30. The ring 60 includes a flange 62 that is positioned about the annular recess 26 of the receiver 22. The flange 62 is secured over the recess 26 of the cup 20 such that the ring 60 defines a portion of the well 30. The flange 62 may define an annular groove 63 that receives the lip 27 of the cup 20 to releasably secure the ring 60 to the receiver 22 of the cup 20. The ring 60 defines an opening 64 that is opposite the flange 62. The opening 64 is sized to permit movement of the stem 50, and thus the ball 40, about three degrees of freedom (DOF) while retaining the ball 40 within the well 30.

Referring now to FIGS. 4 and 5, the ball joint 10 has a locked configuration where the shaft 28 is fixed relative to the stem 50. In the locked configuration, the first end portion 52 of the stem 50 is spaced apart from the inner surface 31 of the cup 20 such that the first end portion 52 engages an inner wall of the channel 42 of the ball 40 to affect outward movement or separation of the segments 44 relative to one another to increase the gap G between adjacent segments as shown in FIG. 5. As the segments 44 are separated from one another, the outer surface 41 of ball 40 is urged into engagement with the inner surface 31 of the receiver 22 and the ring 60 defining the well 30 (FIG. 3). The engagement of the outer surface 41 of the ball 40 and the inner surface 31 defining the well 30 fixes or locks the ball 40 (i.e., prevents rotation of the ball 40) relative to the well 30. With the ball 40 locked relative to the well 30, the ball axis B-B, and thus the stem 50, is locked relative to the shaft 28. The locking biasing member 38 is positioned between the inner surface 31 defining the well 30 and the first end portion 52 of the stem 50 to urge the ball joint 10 towards the locked configuration (i.e., to urge the stem 50 away from the inner surface 31 and forcing ball segments 44 radially outward towards the inner surface). In addition, one of the edges 53b (FIG. 3) of the first end portion 52 is positioned between adjacent segments 44 of the ball 40 such that in response to rotation of the stem 50, the edge 53b positioned between adjacent segments 44 of the ball 40 urge segments 44 of the ball 40 outward and into engagement with the inner surface 31 defining the well 30. It is contemplated that one or each of the inner surface 31 defining the well 30 or the outer surface 41 of the ball 40 may include surface enhancements to increase frictional engagement between the surfaces, decrease frictional engagement between the surfaces, or provide wear resistance of the surfaces.

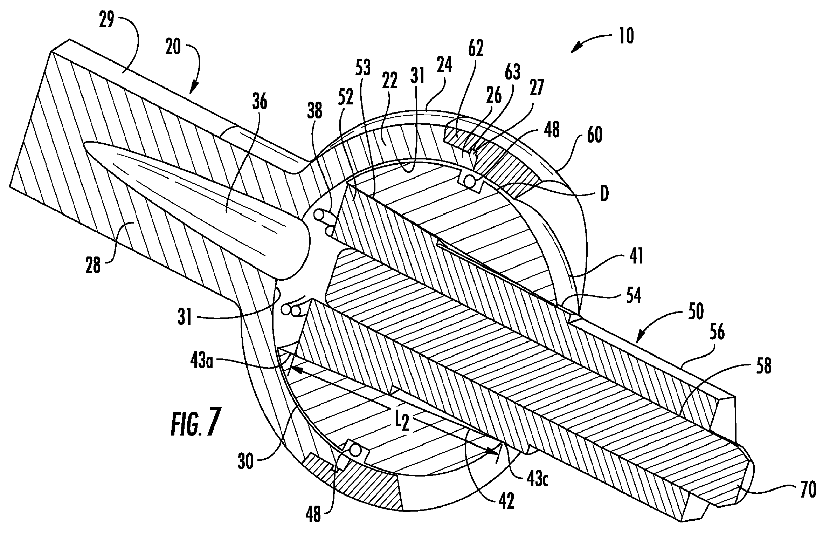

Referring to FIGS. 6 and 7, the ball joint 10 having an unlocked configuration is shown where the shaft 28 and the stem 50 are moveable relative to one another in three DOF. To transition the ball joint 10 from the locked configuration shown in FIG. 4 to the unlocked configuration shown in FIG. 7, the stem 50 is translated along the ball axis B-B towards the inner surface 31 defining the well 30 such that the first end portion 52 of the stem 50 is adjacent the inner surface 31. As the stem 50 is translated, the flats 53a and edges 53b (FIG. 3) of the first end portion 52 are moved away from the segments 44 of the ball 40 allowing the segments 44 to move towards or compress relative to one another such that a diameter of the outer surface 41 of the ball 40 is reduced. In the unlocked configuration the gap G between adjacent segments 44 is smaller (*See* FIG. 6) than the gap G in the locked configuration (*See* FIG. 5). In the unlocked configuration, adjacent segments 44 may be in contact with one another as shown in FIG. 6. It will be understood that the flats 53a and the edges 53b may still contact the segments 44 in the unlocked configuration while allowing the segments 44 to contract to reduce the diameter of the ball 40. As the diameter of the outer surface 41 of the ball 40 is reduced, the frictional engagement between the outer surface 41 and the inner surface 31 defining the well 30 is reduced allowing the ball 40 to rotate within the well 30. The contracting member 48 applies a contracting force to the segments 44 of the ball 40 to decrease the diameter of the outer surface 41 of the ball 40 when in the unlocked configuration.

The locking biasing member 38 may bias the first end portion 52 of the stem 50 into engagement with the segments 44 of the ball 40 to affect outward movement of the segments 44 into engagement with the inner surface 31 of the cup 20 defining the well 30.

With reference now to FIG. 8, the shaft 70 may extend from the lumen 58 of the stem 50 and into the longitudinal passage 36 of the shaft 28 of the cup 20. When the pin 70 is received within the longitudinal passage 36 and the ball joint 10 is in the unlocked configuration, the ball joint 10 is reduced to a single rotational DOF about the pin 70. As detailed below, in a single DOF the ball joint 10 may act as a hinge joint.

Referring back to FIGS. 4 and 7, the locking ball joint 10 is a self-actuating brake that locks in three degrees of freedom when in the locked configuration. Additionally, the locking ball joint 10 is free to rotate in three degrees of freedom, or one degree of freedom when the shaft 70 is received within the passage 36, when in the unlocked configuration.

In the locked configuration, when loads are applied to the stem 50, with the first end portion 52 disposed within the ball 40, the geometry of the locking ball joint 10 is designed such that the stem 50 forces the segments 44 of the ball 40 outwards into the well 30 of the receiver 22 and friction force between the ball 40 and the receiver 22 of the cup 20 increases. As additional load is applied to move the stem 50 relative to the cup 20, the friction forcebetween the ball 40 and receiver 22 increases. The geometry is designed such that the friction force µ between the ball 40 and the receiver 22 of the cup 20 increases at the same rate or a greater rate than the load to move the stem 50 relative to the cup 20. Since the friction force is applied due to a load, an external locking force is not required to lock the locking ball joint 10 (e.g., tightening the locking handle 1030 in the prior art locking ball joint of FIG. 1).

To determine if the locking ball joint 10 will maintain the position of the stem 50 relative to the cup 20 (i.e., remain locked) in a given loading case, two loading cases can be considered. With particular reference to FIG. 4, the first loading case is when a load L is applied in the XY plane. The load L can be applied as a moment rather than a force which will induce an internal load L on the stem 50 as shown. A simplified mathematical analysis of the first loading case shows that if a load is acting in the XY, then for the locking ball joint 10 to remain locked, the friction coefficient µ measured between the ball 40 and the receiver 22 of the cup 20 (which is a property of the materials of the ball 40 and receiver 22), must be greater than or equal to a ratio of the effective contact length (i.e., length L₁ in the locked configuration) of the stem 50 in contact with the ball 40 to the outer diameter of the ball segment D: µ≥L/D. It will be appreciated that any component of the load L along the Z axis, which is parallel to the ball axis B-B, contributes little or none to the locking ability of the locking ball joint 40.

When in the unlocked configuration, the effective contact length changes as is shown by length L₂ shown in FIG. 7. If the proper materials and geometry are used, when in the unlocked configuration, the length L₂ of the stem 50 in contact with the ball 40 is increased such that the L/D ratio is less than the friction coefficient µ such that the stem 50 is rotatable relative to the cup 20. In addition, it is envisioned that as the locking ball joint 10 transitions to the unlocked configuration, an increase in the L/D ratio aids in the transition of the locking ball joint 10 from the locked configuration to the unlocked configuration.

In the second loading case, a torque about the ball axis B-B as represented by torque T. In the locked configuration, the torque T is applied to the stem 50 such that engagement of the first end portion 52 of the stem 50 moves the ball segments 44 outwards. The larger the torque T, the greater the force applied to move the ball segments 44 into the wall 31 defining the well 30 which increases the friction force locking the locking ball joint 10.

With additional reference to FIG. 9, a stem 50 is constructed from an elastic material such that the stem 50 can deform in the presence of high loads. Under a high load L_{H} the locking ball joint 10 can "clutch" when in the locked condition to prevent excess loading from occurring at the locking ball joint 10. When low loads (e.g., loads that cause little or no deflection of the stem 50, are applied to an elastic stem 50, the locking ball joint 10 would function in a similar manner as detailed above and remain locked. However, when a high load L_{H} (e.g., a load that causes deflection of the stem 50) is applied to the elastic stem 50, the high load L_{H} causes deflection of the stem 50 such that the central portion 54 or the second end portion 56 of the stem 50 may contact the ball 40 which results in a contact length of L₃, and thus increases the L/D ratio such that the L/D ratio is greater than the friction coefficient µ allowing the locking ball joint 10 to slip in the presence of the high load L_{H}. Such slippage or clutching may prevent damage to the locking ball joint 10 and/or structures engaged with the cup 20 or the stem 50.

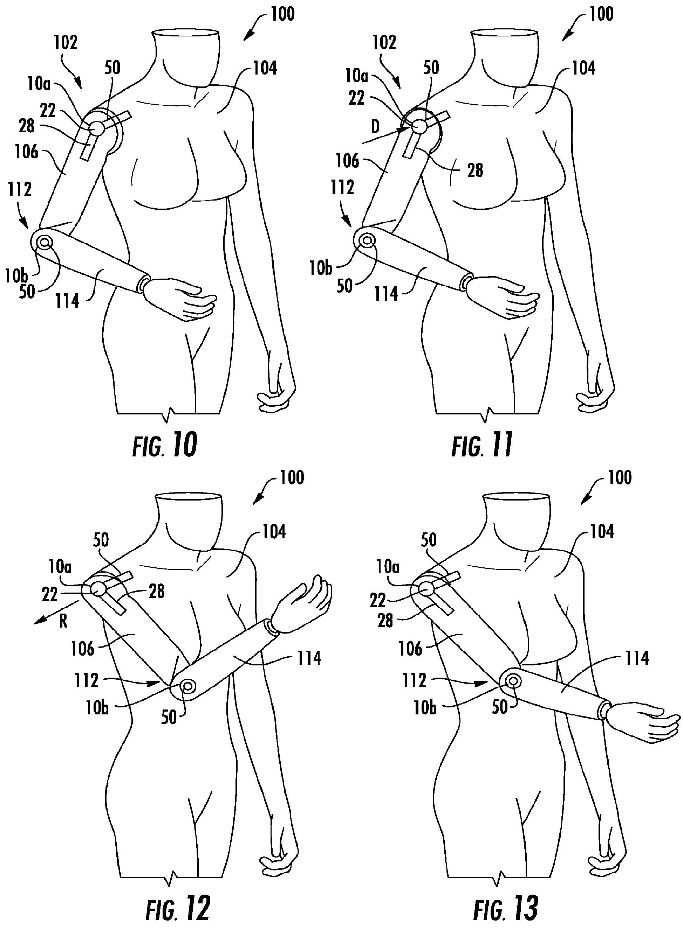

Referring now to FIG. 10, a mannequin 100 is shown which incorporates a device of the present disclosure and includes one or more ball joints 10, as detailed above, to permit and constrain movement between portions of the mannequin 100. A first ball joint 10a is positioned in a shoulder joint 102 of the mannequin 100 with the stem 50 of the first ball joint 10a disposed in a torso 104 of the mannequin 100 and the shaft 28 of the first ball joint 10a disposed in an upper arm segment 106 of the mannequin 100. The engagement features 29 of the shaft 28 and the engagement features 57 of the stem 50 may be received by complementary features defined in the torso 104 and the upper arm segment 106, respectively. In addition, the torso 104 and upper arm segment 106 may include features that engage the engagement features 29, 57, respectively, to prevent the shaft 28 from rotating relative to the torso 104 and to prevent the stem 50 from rotating relative to the upper arm segment 106. It will be appreciated that the positioning of the first ball joint 10a may be reversed such that the stem 50 is disposed within the torso 104 and the shaft 28 may be disposed within the upper arm segment 106. When the first ball joint 10a is in an unlocked configuration, the first ball joint 10a allows the upper arm segment 106 to rotate relative to the torso 104 of the mannequin about the shoulder joint 102 in three rotational DOF. When the first ball joint 10a is in a locked configuration, the first ball joint 10a prevents the upper arm segment 106 from rotating about the shoulder joint 102 relative to the torso 104.

The mannequin 100 also includes a second ball joint 10b disposed in an elbow joint 112 between the upper arm segment 106 and a lower arm segment 114 of the mannequin 100. The second ball joint 10b is set to act as a hinge joint to only allow the upper arm segment 104 and the lower arm segment 114 to move in one DOF relative to one another when the second ball joint 10b is in an unlocked configuration. The shaft 28 of the second ball joint 10b is disposed within upper arm segment 106 and the stem 50 is disposed within the lower arm segment 114. Referring briefly back to FIG. 8, to limit the second ball joint 10b to one DOF, a pin 70 is passed through the lumen 58 of the stem 50 and into the passage 36 of the shaft 28 to limit the second ball joint 10b to rotation about the shaft 28 and the stem 50 when in the unlocked configuration. The pin 70 may be integral to the lower arm segment 114 such that when stem 50 of the second ball joint 10b is disposed within the lower arm segment 114, the pin 70 passes through lumen 58 of the stem 50 and into the passage 36 of the shaft 28. The pin 70 may pass through the lumen 58 of the stem 50 and the passage 36 of the shaft 28 in both the locked and unlocked configurations. The engagement features 29 of the shaft 28 and the engagement features 57 of the stem 50 may be received by complementary features defined in the upper arm segment 106 and the lower arm segment 114, respectively. In addition, the torso 104 and upper arm segment 106 may include complementary features that engage the engagement features 29, 57 to prevent the shaft 28 from rotating relative to the upper arm segment 106 and to prevent the stem 50 from rotating relative to the lower arm segment 114. It will be appreciated that the positioning of the second ball joint 10b may be reversed such that the stem 50 is disposed within the upper arm segment 106 and the shaft 28 may be disposed within the lower arm segment 114.

Referring to FIGS. 10-13, a method for adjusting the arm of a mannequin is disclosed in accordance with the present disclosure. While shown with respect to adjusting an arm of the mannequin, it is envisioned that the locking ball joint can also used on other anatomical joints such as the hip, knee, or ankle. Initially referring to FIG. 10, the first and second ball joints 10a, 10b are in locked configurations to prevent movement of the upper arm segment 106 relative to the torso 104 and to prevent movement of the lower arm 114 relative to the upper arm segment 106, respectively. To move or adjust the upper arm segment 106 relative to the torso 104, the upper arm segment 106 is pressed into the torso at the shoulder joint 104 such that the receiver 22 is moved towards the stem 50 of the first ball joint 10a to transition the first ball joint 10a to an unlocked configuration as represented by arrow D in FIG. 11. With the first ball joint 10a in the unlocked configuration, the upper arm segment 106 is repositioned relative to the torso 104 until the upper arm segment 106 is in a desired position relative to the torso 104. It will be appreciated that the upper arm segment 106 may be rotated about the shoulder joint in three rotational DOF.

With the upper arm segment 106 in the desired position, the upper arm segment 106 is released. When the upper arm segment 106 is released, the locking biasing member 38 (FIG. 4) of the first ball joint 10a translates the stem 50 of the first ball joint 10a away from the receiver 22 in the direction indicated by arrow R in FIG. 12, to return the first ball joint 10a to the locked configuration such that the upper arm segment 106 is fixed relative to the torso 104.

With the first ball joint 10a returned to the locked configuration, the second ball joint 10b is unlocked by pressing the lower arm segment 114 into the upper arm segment 106 at the elbow joint 112. This action translates the stem 50 of the second ball joint 10b towards the receiver to transition the second ball joint 10b to the unlocked configuration to allow rotation of the elbow joint 112. With the second ball joint 10b in the unlocked configuration, the lower arm segment 114 is rotated relative to the upper arm segment 106 about the elbow joint 112 until the lower arm segment 114 is in a desired position as shown in FIG. 13. When the lower arm segment 114 is in a desired position relative to the upper arm segment 106, the lower arm segment 114 is released. When the lower arm segment 114 is released, the locking biasing member 38 of the second ball joint 10b translates the stem 50 away from the receiver 22 of the second ball joint 10b to return the second ball joint 10b to the locked configuration such that the lower arm segment 114 is fixed relative to the upper arm segment 106.

As described herein, the ball joint 10 is used in a mannequin to selectively lock anatomical members relative to one another. It is envisioned that the auto-locking ball joint 10 may be used in a variety of applications including, but not limited to, prosthetic limb joints, mounting stands for vices or similar equipment, music stands, monitor stands, television mounts, computer display mounts, microphone stands, GPS mounts, cell phone holders, floor lamps, and table lamps.

While several embodiments of the disclosure have been shown in the drawings, it is not intended that the disclosure be limited thereto, as it is intended that the disclosure be as broad in scope as the art will allow and that the specification be read likewise. Any combination of the above embodiments is also envisioned and is within the scope of the appended claims. Therefore, the above description should not be construed as limiting, but merely as exemplifications of particular embodiments. Those skilled in the art will envision other modifications within the scope of the claims appended hereto.

## Claims

1. An auto-locking ball joint comprising:
a first elongate member including a receiver disposed at one end, the receiver having an inner surface defining a well;
a ball rotatably disposed within the well, the ball defining a ball axis and a channel about the ball axis, the ball formed from a plurality of segments that are moveable towards and away from the ball axis, the segments of the ball cooperating to define an outer surface of the ball; and
a second elongate member translatable along the ball axis and having a first end portion and a second end portion, the first end portion disposed within channel of the ball,
wherein the auto-locking ball joint has a locked configuration such that the outer surface of the ball frictionally engages the inner surface defining the well to prevent the ball from rotating within the well, wherein the auto-locking ball joint has an unlocked configuration such that the ball is rotatable within the well, and wherein the second elongate member is depressed towards the receiver along the ball axis to transition the auto-locking ball joint from the locked configuration to the unlocked configuration.

2. The auto-locking ball joint according to claim 1, wherein the auto-locking ball joint is biased towards the locked configuration, preferably further comprising a biasing member disposed within the well, the biasing member engaged with the first end portion of the second elongate member to urge the auto-locking ball joint towards the locked configuration.

3. The auto-locking ball joint according to claim 1, wherein the plurality of segments of the ball define a first gap between adjacent segments in the locked configuration of the auto-locking ball joint and the plurality of segments of the ball define a second gap between adjacent segments smaller than the first gap in the unlocked configuration, and wherein preferably adjacent segments of the ball are in contact with one another in the unlocked configuration.

4. The auto-locking ball joint according to claim 1, wherein the first end portion of the second elongate member includes flats and edges defined at the intersection of adjacent flats, and wherein preferably an edge of the first end portion is disposed in a gap between adjacent segments of the ball such that rotation of the stem engages the edge with one of the adjacent segments to move the segment outward into engagement with the inner surface defining the well.

5. The auto-locking ball joint according to claim 1, further compromising a contracting member about the ball, the contracting member urging the plurality of segments of the ball towards the ball axis, and wherein preferably the contracting member urges each segment of the ball towards adjacent segments to reduce a diameter of the ball.

6. The auto-locking ball joint according to claim 1, wherein the second elongate member defines a lumen disposed about the ball axis and wherein the first elongate member defines passage that is in communication with the well, preferably further comprising a pin disposed within the lumen and the passage to align the first and second elongate members with one another while allowing the auto-locking ball joint to rotate in only one degree of freedom.

7. The auto-locking ball joint according to claim 1, wherein at least a portion of the channel of the ball is frusctoconical in shape and wherein the first end portion of the second elongate member is frusctoconical in shape, and wherein preferably the entire channel of the ball is frusctoconical in shape.

8. The auto-locking ball joint according to claim 1, wherein the second end portion of the second elongate member extends from the ball.

9. The auto-locking ball joint according to claim 1, wherein a length of contact between the second elongate member and the ball is larger in the unlocked configuration than in the locked configuration.

10. The auto-locking ball joint according to claim 1, wherein the second elongate member is configured to deflect in the locked configuration in the presence of a high load such that the auto-locking ball joint slips in the locked configuration.

11. An auto-locking ball joint comprising:
a first elongate member including a receiver disposed at one end, the receiver having an inner surface defining a well;
a ball rotatably disposed within the well and has an outer surface, the ball defining a ball axis and a channel about the ball axis; and
a second elongate member translatable along the ball axis, the second elongate member including a portion disposed within the channel of the ball,
wherein the auto-locking ball joint has a locked configuration such that the outer surface of the ball frictionally engages the inner surface defining the well to prevent the ball from rotating within the well, wherein the auto-locking ball joint has an unlocked configuration such that the ball is rotatable within the well, and wherein the second elongate member is depressed towards the receiver along the ball axis to transition the auto-locking ball joint to the unlocked configuration.

12. The auto-locking ball joint according to claim 11, wherein the ball includes a plurality of segments disposed about the ball axis, the plurality of segments movable towards and away from the ball axis to vary a diameter of the ball defined by the outer surface of the ball.

13. The auto-locking ball joint according to claim 11, wherein the ball is formed from a resilient compressible material such that a diameter of the ball defined by the outer surface of the ball may be varied.

14. A mannequin comprising:
a first anatomical structure;
a second anatomical structure; and
a joint between the first and second anatomical structures including an auto-locking ball joint to provide selective movement between the first and second anatomical structures, the auto-locking ball joint including:
a first elongate member including a receiver disposed at one end, the receiver having an inner surface defining a well, the first elongate member disposed within and fixed relative to the first anatomical structure;
a ball rotatably disposed within the well, the ball defining a ball axis and a channel about the ball axis, the ball formed from a plurality of segments that are moveable towards and away from the ball axis, the segments of the ball cooperating to define an outer surface of the ball; and
a second elongate member translatable along the ball axis and having a first end portion and a second end portion, the first end portion disposed within the channel of the ball, the second end portion disposed within and fixed relative to the second anatomical structure,
wherein the joint of the mannequin has a locked configuration such that the outer surface of the ball frictionally engages the inner surface defining the well to prevent the first and second anatomical structures from moving relative to one another, wherein the joint of the mannequin has an unlocked configuration such that the ball is rotatable within the well to allow the first and second anatomical structures to move relative to one another, and wherein the first anatomical structure is pressed into the joint to transition the joint to the unlocked configuration.

15. The mannequin according to claim 14, wherein the first and second anatomical structures are moveable in three degrees of freedom relative to one another when the joint is in the unlocked configuration, and wherein preferably the first and second anatomical structures are only moveable in one degree of freedom relative to one another when the joint is in the unlocked configuration.
